Europäisches Patentamt

European Patent Office

Office européen des brevets

(11) Numéro de publication: **0 015 843**
A1

## (12) DEMANDE DE BREVET EUROPEEN

(21) Numéro de dépôt: 80400294.7

(22) Date de dépôt: 04.03.80

(51) Int. Cl.³: **A 01 D 51/00, A 01 D 33/10**

(30) Priorité: 05.03.79 FR 7905582

(43) Date de publication de la demande: 17.09.80
Bulletin 80/19

(84) Etats contractants désignés: BE DE FR GB IT NL

(71) Demandeur: Lesert, Victor, F-60420 Saint Martin Aux
Bois (FR)

(72) Inventeur: Lesert, Victor, F-60420 Saint Martin Aux Bois
(FR)

(54) **Ramasseuse chargeuse de betteraves avec benne basculante.**

(57) Ramasseuse chargeuse de betteraves avec benne basculante (5) comprenant un dispositif de ramassage relevable (7) et situé dans l'axe de la machine, un premier dispositif de nettoyage (9), un dispositif de transfert (13), un deuxième dispositif de nettoyage (15), un dispositif élévateur (16), tous solidaires du châssis ainsi qu'un dispositif répartiteur (18) solidaire de la benne (5), de préférence du modèle à vis sans fin.

La machine peut être utilisée pour le ramassage et le chargement des betteraves, des pommes de terre et d'autres produits agricoles analogues.

EP 0 015 843 A1

# 0015843

## Ramasseuse chargeuse de betteraves avec benne basculante

La présente invention concerne une ramasseuse chargeuse de betteraves avec benne basculante comprenant deux dispositifs de nettoyage et un dispositif automatique de répartition de la charge dans la benne.

Une fois décolletées, arrachées et mises en andains, les betteraves doivent être ramassées et stockées en bout de champ en attendant d'être transportées jusqu'à la sucrerie. Le ramassage et le chargement sont habituellement réalisés par une machine, dite chargeuse, qui effectue les opérations de ramassage, nettoyage, c'est-à-dire séparation, autant que faire se peut, de la terre adhérant aux betteraves, puis chargement dans une benne indépendante qui chemine à côté et à même vitesse que la chargeuse.

Pour réaliser cet ensemble d'opérations, il faut un tracteur pour tirer la chargeuse et un tracteur pour tirer la benne. Chaque tracteur exige un conducteur et a sa propre consommation de carburant et malgré la présence de deux équipements en fonctionnement simultané, la chargeuse doit s'arrêter pendant que la benne va en bout de champ pour être déchargée.

On connaît déjà des machines qui remédient partiellement à ces difficultés, par exemple le brevet français 2321836, en associant les dispositifs de ramassage et de chargement à une benne solidaire d'un châssis commun, mais elles présentent au moins l'un des défauts suivants :

Nettoyage insuffisant des betteraves qui sont de plus fréquemment blessées et se conservent de ce fait moins bien en attendant la mise en fabrication en sucrerie.

Bennes non basculantes vidées par des dispositifs mécaniques appelés fonds mouvants comportant des chaînes et des barreaux glissant sur le fond des bennes qui ne peuvent pas être étanches et se trouvent de ce fait inutilisables pour les transports en tous genres hors saison betteravière.

Accès très difficile aux divers mécanismes et dispositifs par suite de la présence d'une benne fixe située juste au-dessus d'eux.

Dispositifs de répartition dans la benne non automatiques, ce qui oblige le conducteur du tracteur à arrêter sa machine et à

2

0015843

descendre pour effectuer des réglages fréquents sur les dispositifs de répartition.

La machine suivant l'invention permet d'éviter ces inconvénients et en particulier d'accéder facilement aux divers dispositifs de transfert et de nettoyage pour leur entretien ou réparation en plaçant la benne en position basculée.

Elle permet également de faire deux nettoyages séparés bien distincts, ce qui améliore considérablement la qualité du résultat final.

Elle permet aussi, grâce au chargement préférentiel de la benne de l'avant vers l'arrière, d' appliquer sur l'attache qui la relie au tracteur un effet important d'appui au sol qui favorise l'adhérence des roues arrière du tracteur en terrain difficile, et cela sans avoir à intervenir sur le dispositif répartiteur.

Elle conduit enfin à une réduction des dépenses d'énergie, d'investissement et de main d'oeuvre ainsi qu'une amélioration de la productivité, en particulier grâce au ramassage effectué dans l'axe de la machine, ce qui évite que les betteraves placées en andain soient renfouies dans le sol par le passage des roues du tracteur.

La machine objet de la présente invention comporte un châssis à 1 ou 2 essieux portant, en plus de la benne basculante autour d'un pivot horizontal arrière, un dispositif de ramassage situé sous la partie avant de la benne, un dispositif de nettoyage situé sous la benne, un dispositif de transfert ramenant les betteraves vers l'avant de la benne, un dispositif élévateur de chargement de la benne situé devant celle-ci et un dispositif répartiteur des betteraves dans la benne, caractérisée en ce que le dispositif de ramassage est relevable automatiquement et en marche et se trouve disposé dans l'axe de la machine, le dispositif de transfert est un convoyeur incliné à barres équipées de doigts ou ameneurs qui remonte les betteraves en les portant, et en ce qu'elle comporte en outre un deuxième dispositif de nettoyage qui reçoit les betteraves sortant du dispositif de transfert et les déverse sur le dispositif élévateur, qui déverse lui-même les betteraves dans l'avant de la benne approximativement dans son axe, le dispositif répartiteur étant situé approximativement dans l'axe de celle-ci et animé d'un mouvement continu qui amène progressivement les betteraves de l'avant vers l'arrière au fur et à mesure du remplissage de la benne.

Selon une réalisation de l'invention, le dispositif répartiteur est entraîné par un dispositif mécanique ayant un renvoi coaxial avec l'axe de pivotement de la benne.

Selon une autre réalisation de l'invention, le dispositif répartiteur est entraîné par un dispositif hydraulique ou pneumatique dont les liaisons souples permettent le basculement de la benne dont le répartiteur est solidaire.

Selon une autre réalisation de l'invention, le dispositif répartiteur est une vis sans fin à axe horizontal située dans l'axe et au-dessus de la benne et dont le pas et le sens de rotation sont combinés de façon à faire cheminer les betteraves de l'avant vers l'arrière de la benne.

Selon une autre réalisation de l'invention, les dispositifs de nettoyage sont constitués soit par des doigts sensiblement radiaux appelés turbines et tournant autour d'un axe vertical, soit pas des convoyeurs rectilignes horizontaux à barreaux peu espacés et ne comportant ni doigt ni ameneurs.

Selon une autre réalisation de l'invention, les convoyeurs rectilignes sont animés d'un mouvement continu avec ou sans dispositif de secouage.

Les avantages obtenus grâce à cette invention consistent essentiellement en ceci que l'andain reste bien dans l'axe de la ramasseuse chargeuse et par conséquent du tracteur, ce qui évite l'enfoncement dans la terre, par les roues du tracteur, des betteraves arrachées, le nettoyage effectué en deux temps par deux équipements non adjacents est beaucoup plus efficace puisqu'ils ne se renvoient pas mutuellement la terre et qu'un secouage complémentaire peut être réalisé à volonté; le chargement de la benne est régulier, sans intervention manuelle et rationnel puisque la masse chargée tend toujours à augmenter l'adhérence des roues du tracteur, l'accès aux différents mécanismes est facilité par la possibilité de basculer la benne qui reste utilisable pour d'autres transports, la

4

0015843

main d'oeuvre nécessaire est réduite et la conduite simplifiée en particulier lors du début du travail lorsque le champ n'est pas suffisa, nt dégagé pour permettre le passage côte à côte d'une ramasseuse chargeuse t aditionnelle et d'une benne indépendante en cours de chargement.

L'invention est exposée ci-après plus en détail à l'aide de dessins représentant seulement un mode de réalisation.

La Figure 1 représente en perspective une machine réalisée conformément à la présente invention avec un premier dispositif de nettoyage par turbine, un deuxième dispositif de nettoyage par convoyeur horizontal et un dispositif répartiteur à vis sans fin, le dispositif de ramassage et la benne basculante étant en position de chargement.

La Figure 2 représente une vue de dessus schématique, la benne étant supposée enlevée pour mieux montrer la disposition des différents dispositifs et de leurs mécanismes d'entrainement.

La Figure 3 représente la vue partielle en élévation de la benne et d'un dispositif de répartition à vis entrainé par un dispositif mécanique, la benne basculante étant en position de chargement.

La Figure 4 représente la vue partielle de l'ensemble correspondant à la Figure 3.

La Figure 5 représente la vue partielle en élévation de l'ensemble correspondant à la Figure 3 mais avec la benne en position inclinée.

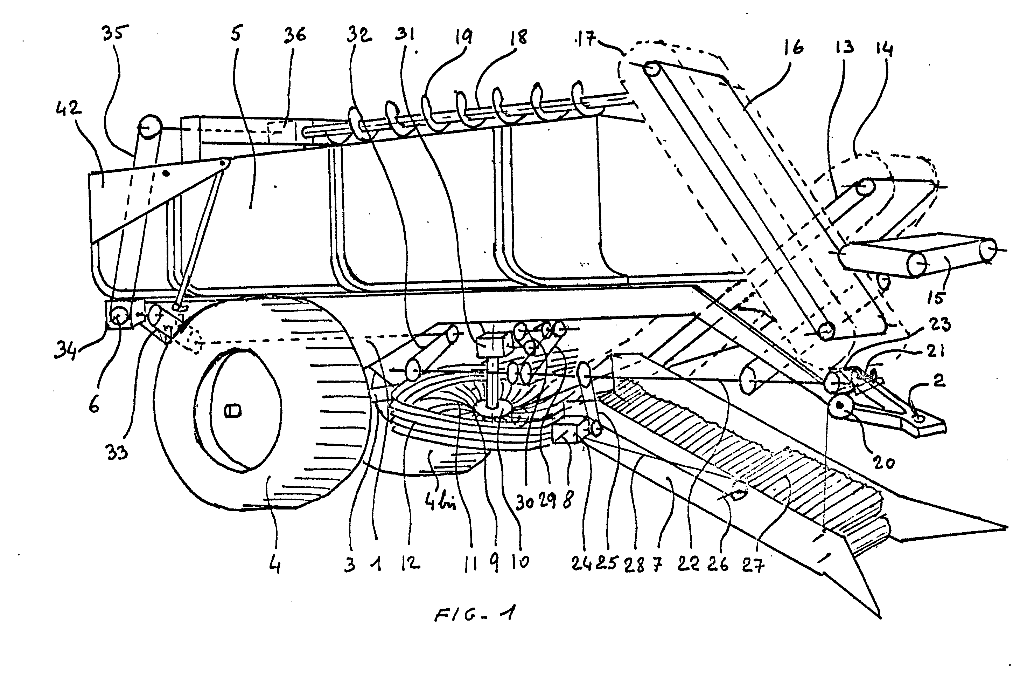

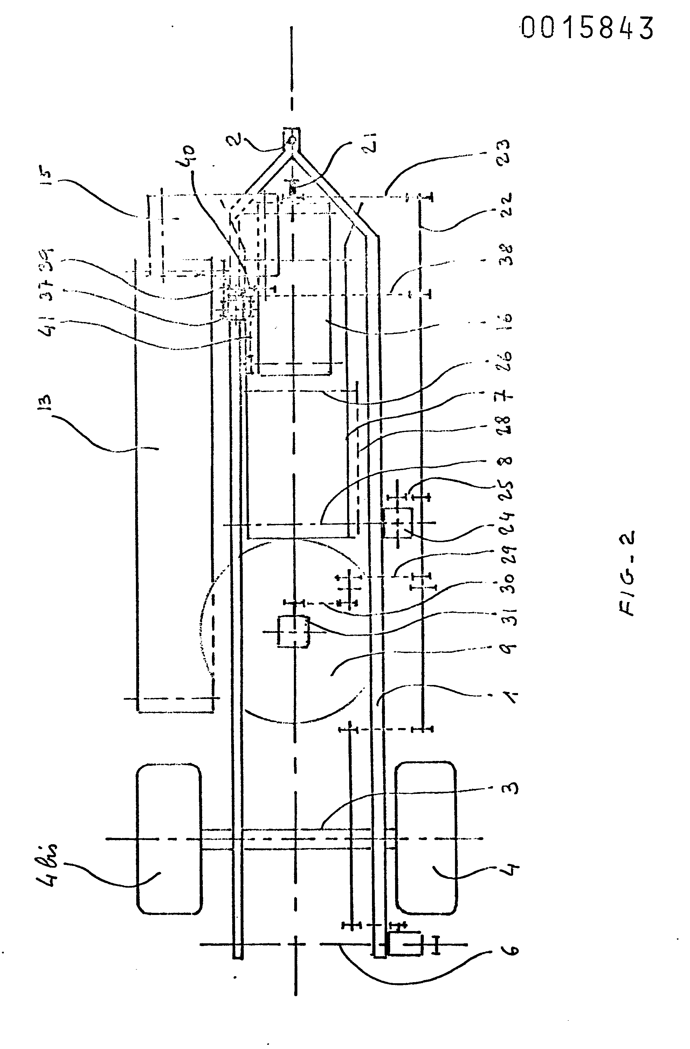

Telle que représentée sur les Figures 1 et 2, la machine comporte un châssis 1, un point d'accrochage 2 à un tracteur non représenté, un essieu 3 porté par deux roues 4 et 4 bis, une benne 5 basculant autour d'un pivot 6 grâce à un verin hydraulique non représenté, un dispositif de ramassage 7 entrainé par un arbre 8 autour duquel il peut pivoter, un dispositif de nettoyage à turbine 9 à axe vertical constitué par un disque central 10 supportant des doigts radiaux 11, et entouré d'une ceinture 12 constituée de ronds circulaires horizontaux, un dispositif de transfert 13 constitué par un convoyeur incliné à deux chaines sans fin portant des barreaux équipés de doigts ou ameneurs non représentés mais dont l'encombrement général est figuré par le pointillé 14, un deuxième dispositif de nettoyage 15 constitué par un convoyeur horizontal éventuellement secoué par tout moyen connu non représenté, à deux chaînes sans fin portant des barreaux sans doigts ni ameneurs, un dispositif élévateur 16 de constitution analogue à celle du dispositif de transfert 13 et d'encombrement figuré par le pointillé 17, un dispositif répartiteur 18 constitué par une vis sans fin 19 un dispositif de relevage 20 pour le dispositif de ramassage 7 réalisé par des moyens connus non représentés.

La chaîne cinématique des différents dispositifs est constituée de la manière décrite schématiquement sur la Figure 2 et visible en majeure partie sur la Figure 1.

Pour la clarté de lecture des dessins, les points de fixation des différents mécanismes de la chaîne cinématique ainsi que les tendeurs de chaîne et les éléments à la portée de l'homme de l'art ne sont pas représentés.

A partir du raccordement 21 à la prise de force du tracteur non représentée, l'arbre principal 22, situé latéralement pour placer le dispositif de ramassage dans l'axe de la machine est entrainé grâce à la transmission 23.

L'arbre principal entraine un renvoi d'angle 24 par la transmission 25. Le renvoi d'angle 24 entraine l'arbre 8 du dispositif de ramassage 7 et l'arbre 26 de l'avaleur 27 par la transmission inverseuse 28.

L'arbre principal entraine également par les transmissions 29 et 30, avec un deuxième rapport de pignons éventuel pour la transmission 29, le renvoi d'angle 31 qui supporte et entraine la turbine 9.

L'arbre principal entraine encore la vis sans fin 19 par les transmissions 32 et 33, le renvoi d'angle 34, la transmission 35 et le renvoi d'angle 36. L'arbre principal entraine enfin le renvoi d'angle 37 par la transmission 28.

Le renvoi d'angle 37 grâce à trois sorties distinctes entraine le dispositif de transfert 13 par la transmission 39, le deuxième dispositif de nettoyage 15 par la transmission 40, le dispositif élévateur 16 par la transmission 41.

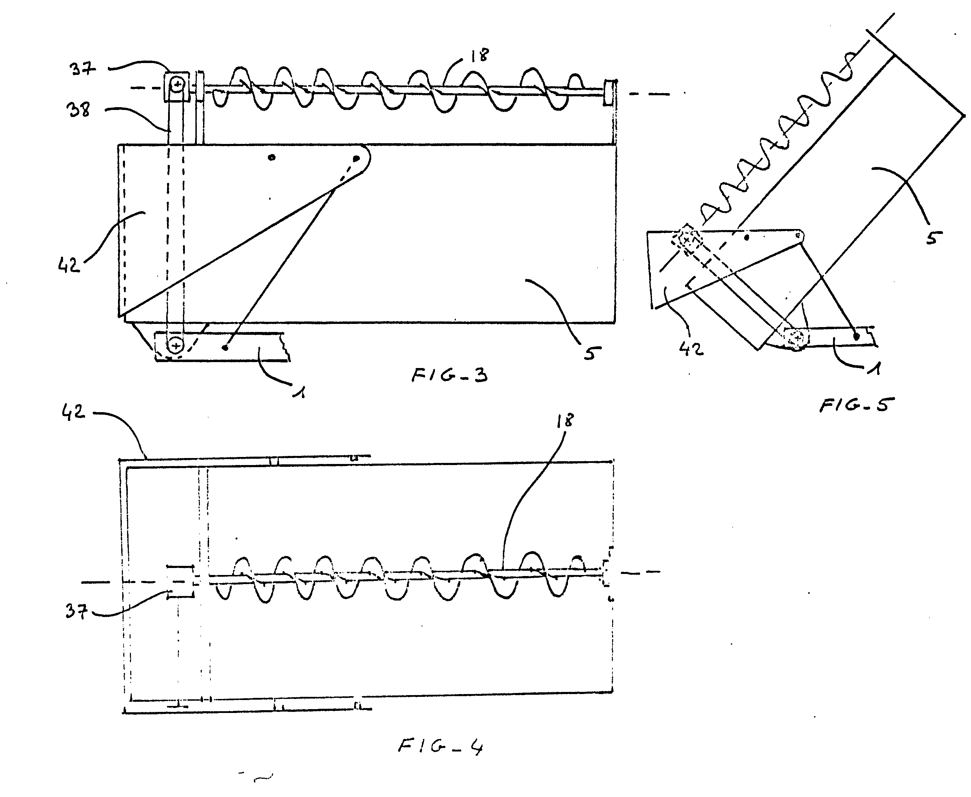

Les Figures 3, 4 et 5 représentent schématiquement la benne 5 avec sa porte 42 à l'arrière et un dispositif répartiteur 18 à vis sans fin 19. D'après les Figures 3 et 5, on voit bien que le dispositif

0015843

répartiteur 18 ne gêne pas le débattement de la porte 42 et dégage tous les mécanismes inférieurs solidaires du châssis 1 qui deviennent alors très aisément accessibles.

Le fonctionnement de la machine selon l'invention est le suivant : la machine accrochée derrière un tracteur unique est conduite par le chauffeur du tracteur et tirée comme une remorque ordinaire. Grâce au raccordement de l'ensemble de la transmission à la prise de force du tracteur, tous les dispositifs décrits sont entrainés. Au moment d'effectuer le ramassage, le chauffeur du tracteur, sans descendre de son tracteur ni s'arrêter, abaisse l'avant du dispositif de ramassage. Les betteraves sont soulevées de terre au fur et à mesure de la progression du tracteur et de la machine. Elles sont entrainées par l'avaleur, déversées sur le premier dispositif de nettoyage qui les débarasse d'une partie de la terre adhérente, reprises par le dispositif de transfert qui les déverse sur le deuxième dispositif de nettoyage, lequel les déverse sur le dispositif élévateur qui les remonte et les déverse à son tour dans la benne. A partir du moment où les betteraves se sont suffisamment accumulées à l'avant de la benne, le niveau supérieur du tas ainsi constitué atteint le niveau du dispositif répartiteur qui repousse progressivement et automatiquement les betteraves vers l'arrière de la benne.

On voit qu'ainsi le chargement de la benne commence toujours par l'avant, ce qui augmente l'adhérence des roues arrière du tracteur. Quand la benne est suffisamment remplie ou même si elle n'est que partiellement remplie, au passage de la machine près de l'aire de stockage, le déchargement se fait très rapidement en reculant vers l'emplacement de déchargement, et en basculant la benne, la prise de force du tracteur étant de préférence arrêtée.

La position relative du dispositif élévateur et de la benne d'une part, le système d'entrainement du répartiteur de la benne d'autre part, permettent de procéder au basculement de la benne par le conducteur du tracteur et sans aucun démontage ni déréglage d'un équipement quelconque.

On voit également qu'en équipant la machine de dispositifs de ramassage, nettoyage, transfert, élévateur et répartiteur adaptés,

7

0015843

on peut travailler non seulement des betteraves mais des pommes de terre ou tout autre produit agricole de structure analogue.

On voit enfin qu'en relevant l'avant du dispositif de ramassage la garde au sol de l'ensemble du mécanisme inférieur est telle que la circulation à travers champs ne présente aucune difficulté et que, même sans démonter le dispositif de répartition de la benne, la conception et la structure de celle-ci et de ses équipements propres permettent de l'utiliser hors saison betteravière pour des transports en tous genres, tels que céréales, fourrage, ou matériaux divers, en vrac ou non, souvent indispensables dans une exploitation agricole.

Revendications

1.Ramasseuse-chargeuse de betteraves avec benne basculante comportant un châssis à 1 ou 2 essieux portant, en plus de la benne 5 basculant autour d'un pivot horizontal arrière 6, un dispositif de ramassage 7 situé sous la partie avant de la benne 5, un dispositif de nettoyage 9 situé sous la benne, un dispositif de transfert 13 ramenant les betteraves vers l'avant de la benne, un dispositif élévateur 16 de chargement de la benne situé devant celle-ci et un dispositif répartiteur 18 des betteraves dans la benne, caractérisée en ce que le dispositif de ramassage 7 est relevable automatiquement et en marche et se trouve disposé dans l'axe de la machine, le dispositif de transfert 13 est un convoyeur incliné à barres équipées de doigts ou ameneurs qui remonte les betteraves en les portant, et en ce qu'elle comporte en outre un deuxième dispositif de nettoyage 15 qui reçoit les betteraves sortant du dispositif de transfert 13 et les déverse sur le dispositif élévateur 16 qui déverse lui-même les betteraves dans l'avant de la benne 5 approximativement dans son axe, le dispositif répartiteur 18 étant situé approximativement dans l'axe de celle-ci et animé d'un mouvement continu qui amène progressivement les betteraves de l'avant vers l'arrière au fur et à mesure du remplissage de la benne 5.

2.Machine selon la revendication 1 caractérisée en ce que le dispositif répartiteur 18 est entraîné par un dispositif mécanique ayant un renvoi coaxial avec l'axe de pivotement 6 de la benne 5.

3.Machine selon la revendication 1 caractérisée en ce que le dispositif répartiteur 18 est entraîné par un dispositif hydraulique ou pneumatique dont les liaisons souples permettent le basculement de la benne 5 dont le répartiteur est solidaire.

4.Machine selon les revendications 1, 2 ou 3 caractérisée en ce que le dispositif répartiteur 18 est une vis sans fin 19 à axe horizontal, situé dans l'axe et au-dessus de la benne 5 et dont le pas

0015843

et le sens de rotation sont combinés de façon à faire cheminer les betteraves de l'avant vers l' arrière de la benne 5.

5.Machine selon les revendications 1 à 4 caractérisée en ce que les dispositifs de nettoyage 9 et 15 sont constitués soit par des disques 10 prolongés par des doigts 11 sensiblement radiaux appelés turbines et tournant autour d'un axe vertical, soit par des convoyeurs rectilignes horizontaux 15 à barreaux peu espacés et ne comportant ni doigt ni ameneurs.

6.Machine selon la revendication 5 caractérisée en ce que les convoyeurs rectilignes 15 sont animés d'un mouvement continu avec ou sans dispositif de secouage.

0015843

FIG-1

FIG. 2

0015843

FIG-5

FIG-3

FIG-4

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | A 01 D 51/00 33/10 |
| | <u>BE - A - 845 605</u> (GILLES)<br>* Page 3, paragraphes 9,10; page 4, page 5, figures 1,2,3 *<br><br>-- | 1,5,6 | |
| | <u>DE - A - 2 315 653</u> (SUDDEUTSCHE ZUCKER)<br>* Page 11, dernier paragraphe; page 12; page 13; page 16, dernier paragraphe; page 17, 18,19; figures 1,2,7,8,9 *<br><br>-- | 1,5 | |
| A | <u>FR - A - 1 165 892</u> (JULIEN)<br>* Page 1, colonne de gauche, paragraphes 2,3,4,5; colonne de droite, page 2, colonne de gauche; figures 1,2,3 *<br><br>-- | 6 | DOMAINES TECHNIQUES RECHERCHES (Int. Cl. ³)<br><br>A 01 D |
| DA | <u>FR - A - 2 321 836</u> (BAILLY)<br>* Page 2, lignes 30-34; page 3, page 4, lignes 1-11; figures 1,2,3 *<br><br>---- | 1,3,5,6 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 04-06-1980 | VERMANDER |

OEB Form 1503.1   06.78